# EUROPÄISCHE PATENTSCHRIFT

(11) **EP 2 855 226 B1**
(45) Veröffentlichungstag und Bekanntmachung des Hinweises auf die Patenterteilung: **26.09.2018**
(21) Anmeldenummer: 13714929.0
(22) Anmeldetag: 09.04.2013
(51) Int. Cl.: B60W 10/06, B60W 10/08, B60W 10/02, B60W 10/18, B60W 20/00, B60W 30/18, F16H 37/04

(54) **VERFAHREN UND VORRICHTUNG ZUM ANSTEUERN EINER MOBILEN ARBEITSMASCHINE**
METHOD AND DEVICE FOR ACTUATING A MOBILE WORK MACHINE
PROCÉDÉ ET DISPOSITIF DE COMMANDE D'UNE MACHINE DE TRAVAIL MOBILE

(30) Priorität: 31.05.2012 DE 102012209166
(43) Veröffentlichungstag der Anmeldung: 08.04.2015
(73) Patentinhaber: ZF Friedrichshafen AG, 88046 Friedrichshafen (DE)
(72) Erfinder: GOETZ, Manuel, 88213 Ravensburg (DE); MOHR, Mark, 88069 Tettnang (DE); BREHMER, Udo, 88045 Friedrichshafen (DE); IUCHI, Kazutaka, 88677 Markdorf (DE)
(86) Internationale Anmeldenummer: PCT/EP2013/057348
(87) Internationale Veröffentlichungsnummer: WO 2013/178393

(56) Entgegenhaltungen:
- EP-A2- 1 759 915
- WO-A1-02/094602
- WO-A1-2011/112138
- DE-A1- 10 115 984
- US-A1- 2011 022 276
- US-A1- 2012 004 797

## Beschreibung

Die vorliegende Erfindung betrifft ein Verfahren und eine Vorrichtung zum Ansteuern einer mobilen Arbeitsmaschine gemäß der im Oberbegriff des Patentanspruches 1 bzw. 12 näher definierten Art.

Bei Arbeitsmaschinen, insbesondere Baumaschinen, tritt während des Arbeitsbetriebs ein häufiges Reversieren, d.h. eine Umkehr der Bewegungsrichtung, auf. Dies kann durch eine sogenannte "Power-Shuttle"-Funktion durchgeführt werden. Eine Möglichkeit besteht darin, durch eine Lastschaltung im Hauptgetriebe über ein Wendekupplungsgetriebe die Fahrtrichtung zu wechseln. Zusätzlich ist ein hydrodynamischer Drehmomentwandler zwischen Motor und Wendekupplungsgetriebe angeordnet. Dabei wird der Drehmomentwandler zum Bremsen der Arbeitsmaschine verwendet, wenn die Fahrtrichtung umgekehrt wird. Dadurch entstehen allerdings am Drehmomentwandler während der Abbremsung große Energieverluste. Eine Möglichkeit diese Energieverluste zu mindern zeigt DE 602 12 384 T2. Dort ist ein Verfahren zur Umkehr der Fahrtrichtung eines sich bewegenden Fahrzeugs beschrieben, bei dem das Fahrzeug zur Fahrtrichtungsumkehr durch eine Fahrbremse gebremst wird. Zwar wird dabei nicht durch den Motor und den Drehmomentwandler gebremst, dennoch entstehen bei dieser Methode ebenfalls große Energieverluste an den Fahrzeugbremsen.

Aus US 2012/004797 A1 sind weiter eine Baumaschine und ein Verfahren zum Steuern einer solchen Baumaschine bekannt, wobei das Antriebssystem der Baumaschine neben einem Verbrennungsmotor eine elektrische Maschine (Motor/Generator) umfasst, welche über ein Summiergetriebe eine Drehbewegung bzw. ein Drehmoment in ein Mehrganggetriebe einleiten. Durch gezielten motorischen/generatorischen Betrieb der elektrischen Maschine kann, in Abhängigkeit der Motordrehzahl des Verbrennungsmotors und unter Berücksichtigung des Ladungszustandes des elektrischen Speicherelements (soweit das elektrische Speicherelement geladen ist), eine Fahrgeschwindigkeitsreduzierung bzw. eine Reversierung der Fahrtrichtung erreicht werden.

Der Erfindung liegt daher die Aufgabe zu Grunde, ein Verfahren und eine Vorrichtung der vorgenannten Art vorzuschlagen, die Energieverluste bei der Abbremsung zur Umkehr der Fahrtrichtung der mobilen Arbeitsmaschine reduzieren.

Die Aufgabe wird erfindungsgemäß durch die Merkmale des Patentanspruches 1 und alternativ durch die Merkmale des Patentanspruchs 12 gelöst. Weitere vorteilhafte Ausgestaltungen ergeben sich aus den jeweiligen Unteransprüchen, der Beschreibung und den Zeichnungen.

Es wird vorgeschlagen die Arbeitsmaschine zur Fahrtrichtungsumkehr rekuperativ abzubremsen. Auf diese Weise ist die zur Durchführung der Fahrtrichtungsumkehr eingesetzte Bremsenergie wiedergewinnbar und kann der Arbeitsmaschine wieder zugeführt werden. Dadurch wird ein Energieverlust beim Abbremsen minimiert bzw. vermieden.

Ein rekuperatives Abbremsen der Arbeitsmaschine wird durch einen Hybridantrieb erreicht. Der Hybridantrieb umfasst eine primäre Antriebsquelle, insbesondere einen Verbrennungsmotor oder dergleichen, und eine sekundäre Antriebsquelle mit einem Energiespeicher. In diesem kann die an der sekundären Antriebsquelle rekuperativ erzeugte Bremsenergie gespeichert und der sekundären Antriebsquelle der Arbeitsmaschine wieder zugeführt werden. Als sekundäre Antriebsquelle ist beispielsweise eine elektrische Maschine mit einem elektrischen Energiespeicher, welche generatorisch und motorisch betreibbar ist vorgesehen.

Eine besonders einfache Möglichkeit die Arbeitsmaschine rekuperativ abzubremsen besteht darin, nach erfasstem Fahrtrichtungsbefehl zu einem ersten Zeitpunkt eine elektrische Maschine eines Hybridantriebs im Antriebsstrang der Arbeitsmaschine generatorisch zu betreiben. Dies geschieht solange, bis annähernd der Stillstand der Arbeitsmaschine zu einem zweiten Zeitpunkt erreicht wird und der Wechsel der Drehmomentübertragung von einer Fahrtrichtungskupplung zur anderen nahe dem Stillstand der Arbeitsmaschine erfolgt. Die dabei generatorisch an der elektrischen Maschine erzeugte elektrische Energie kann einem elektrischen Energiespeicher, beispielsweise eine elektrische Batterie, zugeführt werden. Alternativ kann sie direkt an elektrische Nebenaggregate abgegeben werden. Denkbar ist auch, dass die rekuperativ erzeugte Energie teilweise direkt an Verbraucher abgegeben und i.Ü. gespeichert wird.

Ist die elektrische Maschine im Antriebsstrang der Arbeitsmaschine im Kraftfluss vor den Fahrtrichtungskupplungen eines Wendegetriebes angeordnet, wird die der aktuellen Fahrtrichtung zugeordnete Fahrtrichtungskupplung in eingelegtem Zustand gehalten bis eine Geschwindigkeit nahe dem Stillstand der Arbeitsmaschine zum zweiten Zeitpunkt erreicht ist. Dabei wird vor Erreichen des zweiten Zeitpunktes die der neuen Fahrtrichtung zugeordnete Fahrtrichtungskupplung geschlossen. Auf diese Weise wird ein vollständiges rekuperatives Abbremsen durch die elektrische Maschine gewährleistet. Außerdem kann so der Wechsel der Drehmomentübertragung von einer Fahrtrichtungskupplung zur anderen schnell und einfach beispielsweise durch Lastschaltung mittels Überschneidungsschaltung nahe dem Stillstand der Arbeitsmaschine zum zweiten Zeitpunkt erfolgen.

Ist die elektrische Maschine im Antriebsstrang der Arbeitsmaschine im Kraftfluss vor einem hydrodynamischen Drehmomentwandlers angeordnet, ist es von Vorteil, wenn während der Abbremsung der Arbeitsmaschine die Wandlerüberbrückungskupplung des Drehmomentwandlers in geschlossenem Zustand gehalten oder in diesen überführt wird. Bei Erreichen einer vorbestimmten unteren Drehzahl des Verbrennungsmotors, die vorzugsweise nahe der Abwürgegrenze liegt, kann die Wandlerüberbrückungskupplung geöffnet und in diesem Zustand gehalten werden, wobei die Abbremsung bis zum Stillstand der Arbeitsmaschine zum zweiten Zeitpunkt durch eine Betriebsbremse bzw. Fahrzeugbremse der Arbeitsmaschine erfolgt. Zum Wechsel der Drehmomentübertragung in die neue Fahrtrichtung kann anschließend die der neuen Fahrtrichtung zugeordnete Fahrtrichtungskupplung geschlossen werden.

Bei einer Anordnung der elektrischen Maschine im Antriebsstrang der Arbeitsmaschine im Kraftfluss hinter dem Drehmomentwandler kann während der Abbremsung der Arbeitsmaschine die Wandlerüberbrückungskupplung des Drehmomentwandlers in geöffnetem Zustand gehalten oder in diesen überführt werden bis annähernd der Stillstand der Arbeitsmaschine zum zweiten Zeitpunkt erreicht ist. Dabei gewährleistet der im Betrieb nicht überbrückte Drehmomentwandler eine Entkoppelung der Drehzahl des Verbrennungsmotors von der Geschwindigkeit der Arbeitsmaschine während der Abbremsung. Dadurch wird ein Abwürgen des Verbrennungsmotors sicher vermieden und ein rekuperatives Abbremsen bis zum Erreichen einer Geschwindigkeit nahe dem Stillstand der Arbeitsmaschine zum zweiten Zeitpunkt ermöglicht.

Nach einem erfolgten Wechsel der Fahrtrichtungskupplung kann die Wandlerüberbrückungskupplung in geöffnetem Zustand gehalten oder in diesen überführt werden und ein Antrieb z.B. ein Beschleunigen in der neuen Fahrtrichtung durch den Verbrennungsmotor erfolgen. Bei Erreichen eines vorbestimmten Betriebspunktes der Wandlerüberbrückungskupplung wird diese geschlossen.

In die neue Fahrtrichtung Vor- und nach Schließen der Wandlerüberbrückungskupplung kann die Arbeitsmaschine über den Verbrennungsmotor und die elektrische Maschine jeweils alleine oder z. B. zur Unterstützung des Verbrennungsmotors oder der elektrischen Maschine zusammen angetrieben. Beispielsweise kann der Verbrennungsmotor während des Antriebes in die neue Fahrtrichtung in seiner Dynamik entlastet werden, wodurch Kraftstoffverbrauch und Emissionen reduziert werden.

Bei einer Anordnung der elektrischen Maschine im Kraftfluss vor den Fahrtrichtungskupplungen ist es von Vorteil, wenn während der Abbremsung der Arbeitsmaschine der Verbrennungsmotor über eine geöffnete Trennkupplung vom Antriebsstrang entkoppelt wird. So wird sichergestellt, dass so viel Bremsenergie wie möglich durch die elektrische Maschine rekuperiert wird.

Ist die elektrische Maschine im Kraftfluss vor dem Drehmomentwandler angeordnet, kann während der Abbremsung der Arbeitsmaschine bei geöffneter Trennkupplung die Wandlerüberbrückungskupplung in geschlossenem Zustand gehalten oder in diesen überführt werden und so bei abgekoppeltem Verbrennungsmotor an der elektrischen Maschine rekuperiert werden.

Wird nach einem erfolgten Wechsel der Fahrtrichtungskupplung die Trennkupplung geschlossen und die Wandlerüberbrückungskupplung in geöffnetem Zustand gehalten oder in diesen überführt, kann ein Antrieb in der neuen Fahrtrichtung durch den Verbrennungsmotor und/oder über die elektrische Maschine erfolgen. Bei Erreichen eines vorbestimmten Betriebspunktes der Wandlerüberbrückungskupplung wird diese geschlossen und zur Unterstützung des Verbrennungsmotors die Arbeitsmaschine zugleich über die elektrische Maschine angetrieben.

Alternativ kann nach einem Wechsel der Fahrtrichtungskupplung die Wandlerüberbrückungskupplung in geöffnetem Zustand gehalten oder in diesen überführt werden und ein Antrieb in der neuen Fahrtrichtung durch den Verbrennungsmotor und/oder durch die elektrische Maschine erfolgen. Beispielsweise können durch elektrisches Boosten möglichst schnell hohe Drehzahlen und hohe Leistung der Arbeitsmaschine erreicht werden.

Bei einer Anordnung der elektrischen Maschine im Antriebsstrang der Arbeitsmaschine im Kraftfluss hinter dem Drehmomentwandler kann nach einem erfolgten Wechsel der Fahrtrichtungskupplung die Wandlerüberbrückungskupplung in geöffnetem Zustand gehalten oder in diesen überführt werden und ein Antrieb in der neuen Fahrtrichtung durch die elektrische Maschine erfolgen, wobei der Verbrennungsmotor bis zum Erreichen einer betrieblich angeforderten Drehzahl und einem betrieblich angeforderten Drehmoment nachgeführt wird. Auf diese Weise können Kraftstoffverbrauch und Emissionen des Verbrennungsmotors reduziert werden.

Nach einem erfolgten Wechsel der Fahrtrichtungskupplung kann während einer Übergangsphase die Trennkupplung in geöffneten Zustand gehalten oder in diesen überführt werden und der Antrieb der Arbeitsmaschine über die elektrische Maschine erfolgen, wobei der Verbrennungsmotor bis zum Erreichen eine betrieblich angeforderten Drehzahl und eines betrieblich angeforderten Drehmoments nachgeführt und anschließend die Trennkupplung geschlossen wird und der Antrieb der Arbeitsmaschine durch den Verbrennungsmotor erfolgt.

Vorzugsweise wird der Verbrennungsmotor bei geöffneter Trennkupplung abgeschaltet. Denkbar ist auch, bei Anordnung eines Arbeitsabtriebs im Kraftfluss vor der Trennkupplung, dass der Verbrennungsmotor zum Antrieb eines Arbeitsabtriebs betrieben wird.

Ist die elektrische Maschine im Kraftfluss hinter den Fahrtrichtungskupplungen angeordnet, kann zum ersten Zeitpunkt die der aktuellen Fahrtrichtung zugeordnete Fahrtrichtungskupplung des Wendegetriebes geöffnet und die Arbeitsmaschine durch die elektrische Maschine bis zum Stillstand der Arbeitsmaschine zum zweiten Zeitpunkt abgebremst werden. Dadurch ist es möglich, die Abbremsung bei abgekoppeltem Verbrennungsmotor bis zum Stillstand der Arbeitsmaschine zum zweiten Zeitpunkt vollständig rekuperativ durch die elektrische Maschine durchzuführen.

Bei geöffneten Fahrtrichtungskupplungen des Wendegetriebes kann in der neuen Fahrtrichtung durch die elektrische Maschine angetrieben werden, so dass der Verbrennungsmotor nicht gebraucht wird.

Dabei ist es möglich, bei Erreichen des Stillstands der Arbeitsmaschine zum zweiten Zeitpunkt und geöffneten Fahrtrichtungskupplungen zum Wechsel der Fahrtrichtung den Antrieb der Arbeitsmaschine durch die mit entsprechend in umgekehrte Drehrichtung laufende elektrische Maschine durchzuführen.

Alternativ kann vor Erreichen des zweiten Zeitpunktes die der neuen Fahrtrichtung zugeordnete Fahrtrichtungskupplung kontinuierlich geschlossen werden und der Antrieb der Arbeitsmaschine z.B. durch den Verbrennungsmotor unterstützt werden.

Gemäß einer weiteren Alternative kann nach erfolgtem Wechsel der Fahrtrichtung der Arbeitsmaschine die der neuen Fahrtrichtung zugeordnete Fahrtrichtungskupplung offen gehalten und erst bei Erreichen einer vorbestimmten Geschwindigkeit der Arbeitsmaschine geschlossen und der Antrieb der Arbeitsmaschine dabei durch den Verbrennungsmotor unterstützt werden. Dadurch wird eine Belastung der Fahrtrichtungskupplungen durch ein hohes Anfahrmoment und eine hohe Differenzdrehzahl sicher vermieden.

Des Weiteren ist es möglich, nach Abbremsung bei Erreichen des Stillstands der Arbeitsmaschine zum zweiten Zeitpunkt die der neuen Fahrtrichtung zugeordnete Fahrtrichtungskupplung in einen rutschenden Zustand zu überführen und das Anfahren der Arbeitsmaschine durch den Verbrennungsmotor und zu dessen Unterstützung zugleich durch die elektrischen Maschine anzutreiben. Dabei ist es denkbar, dass die Wandlerüberbrückungskupplung frühzeitig geschlossen wird und der Anfahrvorgang durch Verbrennungsmotor und elektrische Maschine nur über die rutschende Fahrtrichtungskupplung erfolgt.

Eine andere Möglichkeit besteht darin, während der Abbremsung die aktuelle Fahrtrichtungskupplung und die Wandlerüberbrückungskupplung in geschlossenem Zustand zu halten bzw. in diesen zu überführen. So kann die Motorbremswirkung zur Abbremsung genutzt werden. Zur Vermeidung eines Abwürgens des Verbrennungsmotors wird bei Erreichen einer vorbestimmten unteren Drehzahlgrenze des Verbrennungsmotors, die Wandlerüberbrückungskupplung geöffnet und in diesem Zustand gehalten werden, wobei die Abbremsung bis zum Stillstand der Arbeitsmaschine allein zum zweiten Zeitpunkt durch die elektrische Maschine erfolgt.

Die Arbeitsmaschine kann auch durch die generatorisch betriebene elektrische Maschine und durch die Betriebsbremse der Arbeitsmaschine abgebremst werden. Dabei kann die Abbremsung sowohl zeitlich versetzt als auch gleichzeitig durch die elektrische Maschine und durch die Betriebsbremse der Arbeitsmaschine erfolgen.

Die der Erfindung zugrundeliegende Aufgabe wird auch durch eine Vorrichtung zum Ansteuern einer mobilen Arbeitsmaschine mit einem Wendegetriebe und mit einem Hybridantrieb, insbesondere zum Durchführen eines oben beschriebenen Verfahrens gelöst. Die erfindungsgemäße Vorrichtung umfasst ein signaltechnisch mit dem Antriebsstrang der Arbeitsmaschine verbundenes Steuergerät zum Ansteuern einer zugkraftunterbrechungsfreien Fahrtrichtungsumkehr, mit dem zumindest eine elektrische Maschine des Hybridantriebes zur rekuperativen Abbremsung der Arbeitsmaschine während der Fahrtrichtungsumkehr ansteuerbar ist.

Dabei weist das Steuergerät eine Signalverbindung zum Erfassen der Fahrpedalstellung, eine Signalverbindung zum Erfassen eines Fahrtrichtungsbefehls des Fahrers, eine Signalverbindung zum Erfassen eines Ladezustands des elektrischen Energiespeichers zur Speicherung der rekuperativ gewonnenen Energie und zum Abgeben der Energie an die elektrische Maschine, Signalverbindungen zur Ansteuerung von Moment und Drehzahl der elektrischen Maschine, Signalverbindungen zur Ansteuerung der Fahrtrichtungskupplungen des Wendegetriebes und eine Signalverbindung zur Ansteuerung der Wandlerüberbrückungskupplung des hydrodynamischen Drehmomentwandlers umfasst. Denkbar ist auch, dass zum Ansteuern der Betriebsbremse der Arbeitsmaschine am Steuergerät Signalverbindungen vorgesehen sind.

Es ist von Vorteil, wenn das Steuergerät in ein Getriebesteuergerät der Arbeitsmaschine funktional integriert ist.

Nachfolgend wird die vorliegende Erfindung anhand der Zeichnungen weiter erläutert. Es zeigen:
- Figuren 1 und 2: jeweils drei Diagramme verschiedener Parameter als Funktion der Zeit für ein erfindungsgemäßes Verfahren zur Durchführung einer Fahrtrichtungsumkehr einer mobilen Arbeitsmaschine in einem ersten und einem zweiten Ausführungsbeispiel;
- Figur 3: eine schematische Ansicht einer Steuerung zur Fahrtrichtungsumkehr anhand eines Antriebsstranges einer mobilen Arbeitsmaschine.

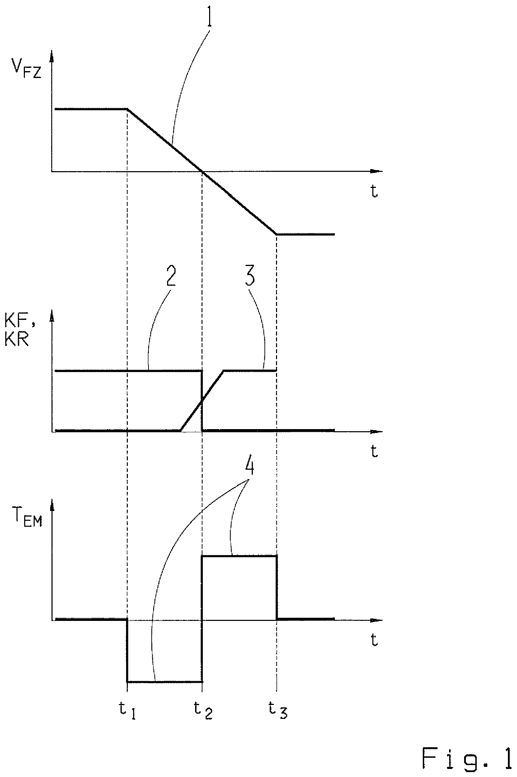

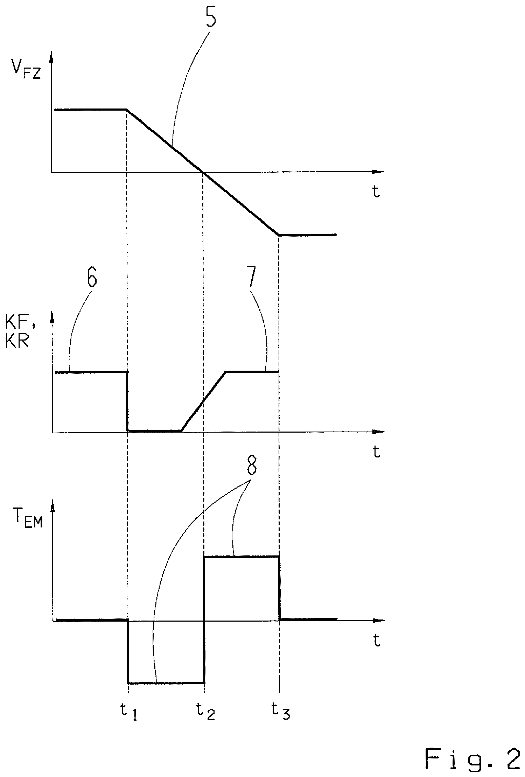

In Figuren 1 und 2 ist jeweils ein Ausführungsbeispiel eines erfindungsgemäßen Verfahrens zur Durchführung der Fahrtrichtungsumkehr beispielshaft von der Vorwärtsfahrtrichtung in die Rückwärtsfahrtrichtung einer mobilen Arbeitsmaschine graphisch dargestellt, wobei die erfindungsgemäße Verfahrensweise auch für den umgekehrten Richtungswechsel anwendbar ist. Das obere Diagramm zeigt jeweils den Geschwindigkeitsverlauf 1, 5 der Arbeitsmaschine, das mittlere Diagramm jeweils den Betätigungsverlauf 2, 3, 6, 7 der Fahrtrichtungskupplungen und das untere Diagramm jeweils den Drehmomentverlauf 4, 8 der elektrischen Maschine 9.

Ein erfindungsgemäßes Verfahren in einem ersten Ausführungsbeispiel gemäß Figur 1, bezieht sich auf eine Anordnung der elektrischen Maschine 9 eines Hybridantriebs im Antriebsstrang der Arbeitsmaschine in Kraftflussrichtung vor den Fahrtrichtungskupplungen. Angetrieben durch den Verbrennungsmotor 10 des Hybridantriebs bewegt sich die Arbeitsmaschine zunächst mit einer bestimmten konstanten Ausgangsgeschwindigkeit in Vorwärtsfahrtrichtung, wie es durch den Geschwindigkeitsverlauf 1 angedeutet ist. Hierbei wird die aktuelle der Vorwärtsfahrtrichtung zugeordnete Fahrtrichtungskupplung zunächst in geschlossenem Zustand und die der Rückwärtsfahrtrichtung zugeordnete Fahrtrichtungskupplung zunächst in geöffnetem Zustand gehalten, wie es sich aus den Betätigungsverläufen 2 und 3 ergibt. Bei Erfassen eines Fahrtrichtungsbefehls des Fahrers wird die Arbeitsmaschine rekuperativ abgebremst (Geschwindigkeitsverlauf 1, erster Zeitpunkt t₁). Hierzu wird die elektrische Maschine 9 generatorisch betrieben und erzeugt dabei ein negatives Drehmoment, welches aus dem Drehmomentverlauf 4 ersichtlich ist. Dabei fällt der Geschwindigkeitsverlauf 1 der Arbeitsmaschine linear bis auf Null zu einem zweiten Zeitpunkt t₂ ab. Der Betätigungsverlauf 3 der der Rückwärtsfahrtrichtung zugeordneten Fahrtrichtungskupplung zeigt, dass diese nahe dem zweiten Zeitpunkt t₂ der Geschwindigkeit Null kontinuierlich linear geschlossen ist, so dass sie zum zweiten Zeitpunkt t₂ der Geschwindigkeit Null etwa zur Hälfte geschlossen ist. Zu diesem Zeitpunkt wird die der Vorwärtsfahrtrichtung zugeordnete Fahrtrichtungskupplung schlagartig geöffnet, welches sich aus dem entsprechenden Betätigungsverlauf 2 ergibt. Dadurch überschneiden sich die Betätigungsverläufe 2 und 3 der Fahrtrichtungskupplungen. Auf diese Weise wird kurz vor dem zweiten Zeitpunkt t₂ der Geschwindigkeit Null der Arbeitsmaschine der Wechsel der Fahrtrichtungskupplungen zur Fahrtrichtungsumkehr durch eine sogenannte Überschneidungsschaltung erreicht. Da die der Vorwärtsfahrtrichtung zugeordnete Fahrtrichtungskupplung bis kurz vor dem Stillstand der Arbeitsmaschine geschlossen gehalten wird, wird sichergestellt, dass die Bremsenergie bis nahe zum Stillstand der Arbeitsmaschine zum zweiten Zeitpunkt t₂ durch die elektrische Maschine 9 rekuperiert wird. Nach dem Fahrtrichtungswechsel wird die elektrische Maschine 9 zur Unterstützung des Verbrennungsmotors 10 motorisch betrieben und erzeugt ein positives Drehmoment bei konstanter Beschleunigung bis in der neuen Rückwärtsfahrtrichtung die konstante Ausgangsgeschwindigkeit erreicht (Geschwindigkeitsverlauf 1, dritter Zeitpunkt t₃) und die elektrische Maschine 9 abgeschaltet wird.

Ein Verfahren zur Durchführung einer Fahrtrichtungsumkehr in einem zweiten Ausführungsbeispiel gemäß Figur 2 bezieht sich auf eine Anordnung der elektrischen Maschine 9 im Antriebsstrang in Kraftflussrichtung hinter den Fahrtrichtungskupplungen. Bei dieser Anordnung kann die Abbremsung durch die elektrische Maschine 9 bei geöffneten Fahrtrichtungskupplungen durchgeführt werden. Hierzu wird bei Beginn des Bremsvorgangs die aktuelle der Vorwärtsfahrtrichtung zugeordnete Fahrtrichtungskupplung schlagartig geöffnet, welches sich aus dem Betätigungsverlauf 6 (ersten Zeitpunkt t₁) ergibt. Auf diese Weise wird während des Bremsvorgangs der Verbrennungsmotor 10 vom Antrieb und von der elektrischen Maschine 9 abgekoppelt. Dadurch kann die Bremsenergie fast bis zum Stillstand der Arbeitsmaschine (zweiter Zeitpunkt t₂) vollständig an der elektrischen Maschine 9 rekuperiert werden, welches sich aus dem aus dem negativen Drehmomentverlauf 8 ergibt. Hierbei wird die der Rückwärtsfahrtrichtung zugeordnete Fahrtrichtungskupplung gemäß ihres Betätigungsverlaufes 7 zunächst in geöffnetem Zustand gehalten. Nahe dem Zeitpunkt der Geschwindigkeit Null (zweiter Zeitpunkt t₂) der Arbeitsmaschine gemäß dem Geschwindigkeitsverlauf 5 wird die der Rückwärtsfahrtrichtung zugeordnete Fahrtrichtungskupplung gemäß des Betätigungsverlaufes 7, wie im Verfahren gemäß Figur 4, kontinuierlich linear geschlossen und nach dem Fahrtrichtungswechsel wird der Verbrennungsmotor 10 durch die elektrische Maschine 9 bei der Beschleunigung in der neuen Fahrtrichtung durch einen positiven Drehmomentverlauf 8 unterstützt.

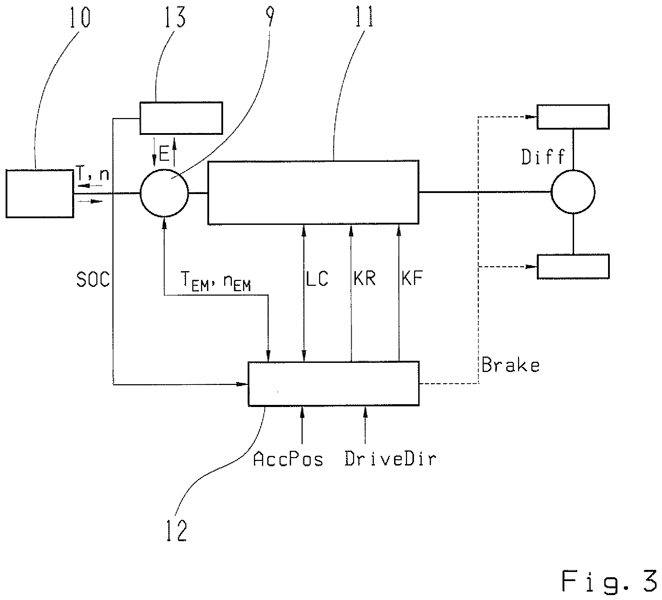

In Figur 3 ist ein Antriebsstrang einer mobilen Arbeitsmaschine beispielhaft dargestellt, anhand dessen eine erfindungsgemäße Vorrichtung zur Ansteuerung einer zugkraftunterbrechungsfreien Fahrtrichtungsumkehr bei einer mobilen Arbeitsmaschine erläutert wird.

Im Antriebsstrang sind ein Verbrennungsmotor 10, eine elektrische Maschine 9 und ein Wendegetriebe 11 zur Umkehr der Fahrtrichtung der Arbeitsmaschine angeordnet, welches zumindest Fahrtrichtungskupplungen für die Vorwärtsfahrtrichtung und Rückwärtsfahrtrichtung und ein Rückwärtsganggetriebe sowie ein Hauptgetriebe umfasst, welches mit dem Differential Diff der Antriebsachse der Arbeitsmaschine verbunden ist. Verbrennungsmotor 10 und elektrische Maschine 9 bilden einen sogenannten parallelen Hybrid. Sie sind im Kraftfluss hintereinander im Antriebsstrang angeordnet, so dass sie gemeinsam auf den Antriebsstrang einwirken können. Die elektrische Maschine 9 ist im Kraftfluss zwischen Verbrennungsmotor 10 und Getriebeeingang des Wendegetriebes 11 angeordnet. Der Verbrennungsmotor 9 kann im Antriebsstrang ein Drehmoment T und eine Drehzahl n erzeugen. Umgekehrt kann vom Antriebsstrang ein Drehmoment T und eine Drehzahl n auf den Verbrennungsmotor 10 übertragen werden.

Das Wendegetriebe 11 weist im Antriebsstrang im Kraftfluss hintereinanderliegend einen hydrodynamischen Drehmomentwandler mit einer Wandlerüberbrückungskupplung, zumindest Fahrtrichtungskupplungen für die Vorwärtsfahrtrichtung und Rückwärtsfahrtrichtung sowie ein Rückwärtsganggetriebe umfasst und ein Lastschaltgetriebe als Hauptgetriebe auf. Hierbei ist die eine Fahrtrichtungskupplung mehreren Vorwärtsgängen des Lastschaltgetriebes und die andere Fahrtrichtungskupplung einem Rückwärtsganggetriebe zugeordnet. Der Drehmomentwandler mit Wandlerüberbrückungskupplung ist im Kraftfluss zwischen Verbrennungsmotor 10 und Fahrtrichtungskupplungen angeordnet. Das Lastschaltgetriebe steht in Antriebsverbindung mit einem Differenzial einer angetriebenen Achse der Arbeitsmaschine, das die im Antriebsstrang erzeugte Antriebsleistung auf die Räder der Achse verteilt.

Zur Auswahl einer passenden Strategie zur Fahrtrichtungsumkehr der Arbeitsmaschine erfasst ein Steuergerät 12 Signale der Systemkomponenten und wertet diese aus. Zur Durchführung der Fahrtrichtungsumkehr sind die Systemkomponenten durch das Steuergerät 12 ansteuerbar. In einem elektrischen Energiespeicher 13, hier eine elektrische Batterie, kann die bei der Abbremsung durch die elektrische Maschine 9 rekuperativ erzeugte elektrische Energie E gespeichert und bei Bedarf der elektrischen Maschine 9 wieder zugeführt werden.

Die elektrischen Signalflussverbindungen bzw. Signalverbindungen sind jeweils durch Pfeile angedeutet. Die Steuergerät 12 erfasst die Fahrpedalstellung AccPos, den Fahrtrichtungsbefehl DriveDir des Fahrers, den Ladezustand SOC der elektrischen Batterie 13, das Drehmoment T_{EM} und die Drehzahl n_{EM} der elektrischen Maschine 9 und den Betriebszustand der Wandlerüberbrückungskupplung LC. Zur Durchführung der Fahrtrichtungsumkehr sind das Drehmoment T_{EM} und die Drehzahl n_{EM} der elektrischen Maschine 9, die Wandlerüberbrückungskupplung LC, die Fahrtrichtungskupplungen KR, KF sowie ggf. die Betriebsbremsen BRAKE der Arbeitsmaschine, die auf die Räder wirken, durch das Steuergerät 12 ansteuerbar.

Alternativ kann eine nicht dargestellte Trennkupplung zur Abkoppelung des Verbrennungsmotors 9 vom Antriebsstrang zwischen diesem und der elektrischen Maschine 10 vorgesehen sein, wobei der Betriebszustand der Trennkupplung durch das Steuergerät 12 erfassbar und die Trennkupplung durch das Steuergerät 12 ansteuerbar ist.

### Bezugszeichen

- 1: Geschwindigkeitsverlauf
- 2: Betätigungsverlauf
- 3: Betätigungsverlauf
- 4: Drehmomentverlauf
- 5: Geschwindigkeitsverlauf
- 6: Betätigungsverlauf
- 7: Betätigungsverlauf
- 8: Drehmomentverlauf
- 9: Elektrische Maschine
- 10: Verbrennungsmotor
- 11: Wendegetriebe
- 12: Steuergerät
- 13: Elektrischer Energiespeicher
- E: Energie
- T: Drehmoment
- n: Drehzahl
- AccPos: Signalverbindung Fahrpedalstellung
- DriveDir: Signalverbindung Fahrtrichtungsbefehl
- SOC: Signalverbindung Ladezustand Batterie bzw. Energiespeicher
- T_{EM}: Signalverbindung Drehmoment elektr. Maschine
- n_{EM}: Signalverbindung Drehzahl elektr. Maschine
- LC: Signalverbindung Wandlerüberbrückungskupplung
- KF: Signalverbindung Fahrtrichtungskupplung
- KR: Signalverbindung Fahrtrichtungskupplung
- BRAKE: Signalverbindung Betriebsbremse
- t₁: erster Zeitpunkt Beginn der Rekuperation
- t₂: zweiter Zeitpunkt Stillstand der Arbeitsmaschine
- t₃: dritter Zeitpunkt Abschalten der elektrischen Maschine
- V_{Fz}: Geschwindigkeit der Arbeitsmaschine
- Diff: Differential der Antriebsachse der Arbeitsmaschine

## Patentansprüche

1. Verfahren zum Ansteuern einer mobilen Arbeitsmaschine mit einem Wendegetriebe (11), wobei eine Fahrtrichtungsumkehr durch Erfassen eines Fahrtrichtungsbefehls eingeleitet und ein Wechsel der Drehmomentübertragung von einer Fahrtrichtung zur anderen Fahrtrichtung durch eine Überschneidungsschaltung durchgeführt wird, **dadurch gekennzeichnet, dass** nach erfasstem Fahrtrichtungsbefehl zu einem ersten Zeitpunkt (t₁) zur Abbremsung der Arbeitsmaschine eine elektrische Maschine (9) eines Hybridantriebs im Antriebsstrang der Arbeitsmaschine generatorisch betrieben wird, bis annähernd der Stillstand der Arbeitsmaschine zu einem zweiten Zeitpunkt (t₂) erreicht wird und dass der Wechsel der Drehmomentübertragung von einer Fahrtrichtung zur anderen nahe dem Stillstand der Arbeitsmaschine durchgeführt wird.

2. Verfahren nach Anspruch 1, **dadurch gekennzeichnet, dass** bei Anordnung der elektrischen Maschine (9) im Kraftfluss vor den Fahrtrichtungskupplungen eines Wendegetriebes (11) während der Abbremsung die der aktuellen Fahrtrichtung zugeordnete Fahrtrichtungskupplung des Wendegetriebes (11) in eingelegtem Zustand gehalten wird bis annähernd der Stillstand der Arbeitsmaschine zum zweiten Zeitpunkt (t₂) erreicht wird und dass vor Erreichen des zweiten Zeitpunktes (t₂) die der neuen Fahrtrichtung zugeordnete Fahrtrichtungskupplung geschlossen wird.

3. Verfahren nach Anspruch 2, **dadurch gekennzeichnet, dass** während der Abbremsung der Arbeitsmaschine die Wandlerüberbrückungskupplung des Drehmomentwandlers in geschlossenem Zustand gehalten oder in diesen überführt wird, dass bei Erreichen einer vorbestimmten unteren Drehzahlgrenze des Verbrennungsmotors (10) die Wandlerüberbrückungskupplung geöffnet und in diesem Zustand gehalten wird, dass danach die Arbeitsmaschine bis zum Stillstand zum zweiten Zeitpunkt (t₂) durch die Betriebsbremse der Arbeitsmaschine abgebremst wird und dass anschließend die der neuen Fahrtrichtung zugeordnete Fahrtrichtungskupplung geschlossen wird.

4. Verfahren nach Anspruch 2 oder 3, **dadurch gekennzeichnet, dass** nach einem erfolgten Wechsel der Fahrtrichtungskupplung die Wandlerüberbrückungskupplung in geöffnetem Zustand gehalten wird, dass die Arbeitsmaschine in die neue Fahrtrichtung angetrieben wird und dass bei Erreichen eines vorbestimmten Betriebspunktes die Wandlerüberbrückungskupplung geschlossen wird.

5. Verfahren nach Anspruch 4, **dadurch gekennzeichnet, dass** die Arbeitsmaschine in die neue Fahrtrichtung durch den Verbrennungsmotor (10) und/oder die elektrische Maschine (9) angetrieben wird.

6. Verfahren nach einem der Ansprüche 1 bis 5, **dadurch gekennzeichnet, dass** während der Abbremsung der Arbeitsmaschine durch die elektrische Maschine (9) der Verbrennungsmotor (10) durch eine Trennkupplung vom Antriebsstrang entkoppelt wird.

7. Verfahren nach einem der Ansprüche 4 bis 6, **dadurch gekennzeichnet, dass** nach einem erfolgten Wechsel der Fahrtrichtungskupplung die Trennkupplung geschlossen und die Wandlerüberbrückungskupplung in geöffnetem Zustand gehalten oder in diesen überführt wird, dass die Arbeitsmaschine in die neue Fahrtrichtung durch den Verbrennungsmotor (10) angetrieben wird, dass bei Erreichen eines vorbestimmten Betriebspunktes die Wandlerüberbrückungskupplung geschlossen wird und dass die Arbeitsmaschine zur Unterstützung des Verbrennungsmotors (10) durch die elektrische Maschine (9) angetrieben wird.

8. Verfahren nach Anspruch 1, **dadurch gekennzeichnet, dass** bei Anordnung der elektrischen Maschine (9) im Kraftfluss hinter den Fahrtrichtungskupplungen zum ersten Zeitpunkt (t₁) die der aktuellen Fahrtrichtung zugeordnete Fahrtrichtungskupplung des Wendegetriebes (11) geöffnet wird und dass die Arbeitsmaschine durch die elektrische Maschine (9) bis zum Stillstand der Arbeitsmaschine zum zweiten Zeitpunkt (t₂) abgebremst wird.

9. Verfahren nach Anspruch 8, **dadurch gekennzeichnet, dass** bei geöffneten Fahrtrichtungskupplungen des Wendegetriebes (11) die Arbeitsmaschine in der neuen Fahrtrichtung durch die elektrische Maschine angetrieben wird.

10. Verfahren nach Anspruch 8, **dadurch gekennzeichnet, dass** vor Erreichen des zweiten Zeitpunktes (t₂) die der neuen Fahrtrichtung zugeordnete Fahrtrichtungskupplung kontinuierlich geschlossen und der Antrieb der Arbeitsmaschine durch den Verbrennungsmotor unterstützt wird.

11. Verfahren nach einem der vorangehenden Ansprüche, **dadurch gekennzeichnet, dass** die Arbeitsmaschine durch die elektrische Maschine (9) und die Betriebsbremse der Arbeitsmaschine abgebremst wird.

12. Vorrichtung zum Ansteuern einer mobilen Arbeitsmaschine mit einem Wendegetriebe (11) und mit einem Hybridantrieb, insbesondere zum Durchführen eines Verfahrens nach einem der vorangehenden Ansprüche, **dadurch gekennzeichnet, dass** ein signaltechnisch mit dem Antriebsstrang der Arbeitsmaschine verbundenes Steuergerät (12) zum Ansteuern einer zugkraftunterbrechungsfreien Fahrtrichtungsumkehr vorgesehen ist, mit dem zumindest eine elektrische Maschine (9) des Hybridantriebes nach erfasstem Fahrtrichtungsbefehl zu einem ersten Zeitpunkt (t₁) zur Abbremsung der Arbeitsmaschine eine elektrische Maschine (9) eines Hybridantriebs im Antriebsstrang der Arbeitsmaschine generatorisch betreibbar ist, bis annähernd der Stillstand der Arbeitsmaschine zu einem zweiten Zeitpunkt (t₂) erreicht wird und dass Fahrtrichtungskupplungen derart ansteuerbar sind, dass der Wechsel der Drehmomentübertragung von einer Fahrtrichtung zur anderen nahe dem Stillstand der Arbeitsmaschine durchgeführt wird.

13. Vorrichtung nach Anspruch 12, **dadurch gekennzeichnet, dass** das Steuergerät (12) eine Signalverbindung zum Erfassen der Fahrpedalstellung (AccPos), eine Signalverbindung zum Erfassen eines Fahrtrichtungsbefehls (DriveDir) des Fahrers, eine Signalverbindung zum Erfassen eines Ladezustands (SOC) des elektrischen Energiespeichers (13) zur Speicherung der rekuperativ gewonnenen Energie (E) und zum Abgeben der Energie (E) an die elektrische Maschine (9), Signalverbindungen zur Ansteuerung von Moment und Drehzahl (T_{EM}, n_{EM}) der elektrischen Maschine (9), Signalverbindungen zur Ansteuerung der Fahrtrichtungskupplungen (KR, KF) des Wendegetriebes (11) und eine Signalverbindung zur Ansteuerung der Wandlerüberbrückungskupplung (LC) des hydrodynamischen Drehmomentwandlers umfasst.

14. Vorrichtung nach Anspruch 12 oder 13, **dadurch gekennzeichnet, dass** das Steuergerät (12) in ein Getriebesteuergerät der Arbeitsmaschine funktional integriert ist.

## Claims

1. Method for actuating a mobile working machine with a reversing gear unit (11), wherein a reversal of the direction of travel is initiated by registering a direction of travel command, and a change of the transmission of torque from one direction of travel to the other direction of travel is carried out by means of overlapping gear changes, **characterized in that** after the direction of travel command has been registered an electric machine (9) of a hybrid drive in the drive train of the working machine is operated as a generator in order to brake the working machine at a first time (t₁) until approximately the stationary state of the working machine is reached at a second time (t₂), and **in that** the changeover of the transmission of torque from one direction of travel to the other is carried out near to the stationary state of the working machine.

2. Method according to Claim 1, **characterized in that** when the electric machine(9) is arranged upstream of the direction of travel clutches of a reversing gear unit (11) in the power flux during the braking operation, the direction of travel clutch, assigned to the current direction of travel, of the reversing gear unit (11) is kept in the engaged state until approximately the stationary state of the working machine is reached at the second time (t₂), and **in that** before the second time (t₂) is reached, the direction of travel clutch which is assigned to the new direction of travel is closed.

3. Method according to Claim 2, **characterized in that** during the braking of the working machine, the converter lockup clutch of the torque converter is kept in the closed state or placed in said state, **in that** when a predetermined lower rotational speed limit of the internal combustion engine (10) is reached, the converter lockup clutch is opened and is kept in this state, **in that** after this the working machine is braked to the stationary state at the second time (t₂) by means of the service brake of the working machine, and **in that** subsequently the direction of travel clutch which is assigned to the new direction of travel is closed.

4. Method according to Claim 2 or 3, **characterized in that** after a changeover of the direction of travel clutch has taken place, the converter lockup clutch is kept in the opened state, **in that** the working machine is driven in the new direction of travel, and **in that** when a predetermined operating point is reached the converter lockup clutch is closed.

5. Method according to Claim 4, **characterized in that** the working machine is driven in the new direction of travel by the internal combustion engine (10) and/or the electric machine (9).

6. Method according to one of Claims 1 to 5, **characterized in that** during the braking of the working machine by the electric machine (9) the internal combustion engine (10) is uncoupled from the drive train by means of a clutch.

7. Method according to one of Claims 4 to 6, **characterized in that** after a changeover of the direction of travel clutch has taken place, the clutch is closed and the converter lockup clutch is kept in the opened state or is placed in said state, **in that** the working machine is driven in the new direction of travel by the internal combustion engine (10), **in that** when a predetermined operating point is reached the converter lockup clutch is closed, and **in that** the working machine is driven by the electric machine (9) in order to assist the internal combustion engine (10).

8. Method according to Claim 1, **characterized in that** when the electric machine (9) is arranged downstream of the direction of travel clutches in the power flux, the direction of travel clutch, assigned to the current direction of travel, of the reversing gear unit (11) is opened at the first time (t₁), and **in that** the working machine is braked by the electric machine (9) up to the stationary state of the working machine at the second time (t₂).

9. Method according to Claim 8, **characterized in that** when the direction of travel clutches of the reversing gear unit (11) are opened, the working machine is driven in the new direction of travel by the electric machine.

10. Method according to Claim 8, **characterized in that** before the second time (t₂) is reached, the direction of travel clutch which is assigned to the new direction of travel is continuously closed and the driving of the drive machine by the internal combustion engine is assisted.

11. Method according to one of the preceding claims, **characterized in that** the working machine is braked by the electric machine (9) and the service brake of the working machine.

12. Device for actuating a mobile working machine having a reversing gear unit (11) and having a hybrid drive, in particular for carrying out a method according to one of the preceding claims, **characterized in that** a control device (12) which is connected by signalling technology to the drive train of the working machine and has the purpose of actuating a reversal of the direction of travel without interruption of the tractive force is provided, with which control device (12) at least one electric machine (9) of the hybrid drive can be operated as a generator, after the direction of travel command has been registered, at a first time (t₁) to brake the working machine in the drive train of the working machine, until approximately the stationary state of the working machine is reached at a second time (t₂), and **in that** direction of travel clutches can be actuated in such a way that the changeover of the transmission of torque from one direction of travel to the other is carried out near to the stationary state of the working machine.

13. Device according to Claim 12, **characterized in that** the control device (12) comprises a signal connection for detecting the position of the accelerator pedal (AccPos), a signal connection for detecting a direction of travel command (DriveDir) of the driver, a signal connection for detecting a state of charge (SOC) of the electric energy store (13) for storing the recuperatively acquired energy (E) and for outputting the energy (E) to the electric machine (9), signal connections for actuating the torque and rotational speed (T_{EM}, n_{EM}) of the electric machine (9), signal connections for actuating the direction of travel clutches (KR, KF) of the reversing gear unit (11), and a signal connection for actuating the converter lock up clutch (LC) of the hydrodynamic torque converter.

14. Device according to Claim 12 or 13, **characterized in that** the control device (12) is functionally integrated into a transmission control device of the working machine.

## Revendications

1. Procédé de commande d'une machine de travail mobile avec une transmission réversible (11), dans lequel on introduit une inversion du sens de marche par détection d'un ordre de sens de marche et on exécute un changement de la transmission de couple d'un sens de marche à l'autre sens de marche par un passage de vitesses à chevauchement, **caractérisé en ce qu'**après la détection de l'ordre de sens de marche à un premier instant (t₁) une machine électrique (9) d'un entraînement hybride est utilisée en générateur dans la chaîne cinématique de la machine de travail afin de freiner la machine de travail, jusqu'à ce que l'arrêt de la machine de travail soit pratiquement atteint à un deuxième instant (t₂), et **en ce que** l'on exécute le changement de la transmission de couple d'un sens de marche à l'autre tout près de l'arrêt de la machine de travail.

2. Procédé selon la revendication 1, **caractérisé en ce que** par l'agencement de la machine électrique (9) dans le flux de force avant les embrayages de sens de marche d'une transmission réversible (11), on maintient en état engagé pendant le freinage l'embrayage de sens de marche de la transmission réversible (11) associé au sens de marche actuel jusqu'à ce que l'arrêt de la machine de travail soit pratiquement atteint à l'instant (t₂) et **en ce que** l'on ferme l'embrayage de sens de marche associé au nouveau sens de marche avant d'atteindre le deuxième instant (t₂) .

3. Procédé selon la revendication 2, **caractérisé en ce que** l'on maintient ou on amène l'embrayage de pontage de convertisseur du convertisseur de couple dans l'état fermé pendant le freinage de la machine de travail, **en ce que** l'on ouvre l'embrayage de pontage de convertisseur lorsque l'on atteint un nombre de tours limite inférieur prédéterminé du moteur à combustion interne (10) et on le maintient dans cet état, **en ce que** l'on freine ensuite la machine de travail jusqu'à l'arrêt au deuxième instant (t₂) au moyen du frein de service de la machine de travail et **en ce que** l'on ferme enfin l'embrayage de sens de marche associé au nouveau sens de marche.

4. Procédé selon la revendication 2 ou 3, **caractérisé en ce qu'**après avoir effectué un changement de l'embrayage de sens de marche on maintient l'embrayage de pontage de convertisseur dans l'état ouvert, **en ce que** l'on entraîne la machine de travail dans le nouveau sens de marche et **en ce que** l'on ferme l'embrayage de pontage de convertisseur lorsque l'on atteint un point de fonctionnement prédéterminé.

5. Procédé selon la revendication 4, **caractérisé en ce que** l'on entraîne la machine de travail dans le nouveau sens de marche au moyen du moteur à combustion interne (10) et/ou de la machine électrique (9).

6. Procédé selon l'une quelconque des revendications 1 à 5, **caractérisé en ce que** pendant le freinage de la machine de travail par la machine électrique (9) on découple le moteur à combustion interne (10) de la chaîne cinématique au moyen d'un embrayage de séparation.

7. Procédé selon l'une quelconque des revendications 4 à 6, **caractérisé en ce qu'**après avoir effectué un changement de l'embrayage de sens de marche, on ferme l'embrayage de séparation et on maintient l'embrayage de pontage de convertisseur dans l'état ouvert ou on l'amène dans cet état, **en ce que** l'on entraîne la machine de travail dans le nouveau sens de marche au moyen du moteur à combustion interne (10), **en ce que** l'on ferme l'embrayage de pontage de convertisseur après avoir atteint un point de fonctionnement prédéterminé et **en ce que** l'on entraîne la machine de travail au moyen de la machine électrique (9) pour assister le moteur à combustion interne (10).

8. Procédé selon la revendication 1, **caractérisé en ce que** par l'agencement de la machine électrique (9) dans le flux de force après les embrayages de sens de marche, on ouvre à l'instant (t₁) l'embrayage de sens de marche de la transmission réversible (11) associé au sens de marche actuel et **en ce que** l'on freine la machine de travail au moyen de la machine électrique (9) jusqu'à l'arrêt de la machine de travail au deuxième instant (t₂).

9. Procédé selon la revendication 8, **caractérisé en ce qu'**avec les embrayages de sens de marche de la transmission réversible (11) ouverts, la machine de travail est entraîné dans le nouveau sens de marche au moyen de la machine électrique.

10. Procédé selon la revendication 8, **caractérisé en ce qu'**avant d'atteindre le deuxième instant (t₂) on ferme de façon continue l'embrayage de sens de marche associé au nouveau sens de marche et on assiste l'entraînement de la machine de travail au moyen du moteur à combustion interne.

11. Procédé selon l'une quelconque des revendications précédentes, **caractérisé en ce que** l'on freine la machine de travail au moyen de la machine électrique (9) et du frein de service de la machine de travail.

12. Dispositif de commande d'une machine de travail mobile avec une transmission réversible (11) et avec un entraînement hybride, en particulier pour l'exécution d'un procédé selon l'une quelconque des revendications précédentes, **caractérisé en ce qu'**il est prévu un appareil de commande (12) relié par signaux à la chaîne cinématique de la machine de travail pour commander une inversion du sens de marche sans interruption de la force de traction, avec lequel au moins une machine électrique (9) de l'entraînement hybride peut, après détection de l'ordre de sens de marche à un premier instant (t₁), fonctionner en générateur pour freiner la machine de travail dans la chaîne cinématique de la machine de travail, jusqu'à ce que l'arrêt de la machine de travail soit pratiquement atteint à un deuxième instant (t₂), et **en ce que** les embrayages de sens de marche peuvent être commandés de telle manière que le changement de la transmission de couple d'un sens de marche à l'autre soit exécuté tout près de l'arrêt de la machine de travail.

13. Dispositif selon la revendication 12, **caractérisé en ce que** l'appareil de commande (12) comprend une liaison par signal pour la détection de la position de la pédale des gaz (AccPos), une liaison par signal pour la détection d'un ordre de sens de marche (DriveDir) du conducteur, une liaison par signal pour la détection d'un état de charge (SOC) de l'accumulateur d'énergie électrique (13) pour l'accumulation de l'énergie recueillie par récupération (E) et pour fournir l'énergie (E) à la machine électrique (9), des liaisons par signal pour la commande du couple et du nombre de tours (T_{EM}, n_{EM}) de la machine électrique (9), des liaisons par signal pour la commande des embrayages de sens de marche (KR, KF) de la transmission réversible (11) et une liaison par signal pour la commande de l'embrayage de pontage de convertisseur (LC) du convertisseur de couple hydrodynamique.

14. Dispositif selon la revendication 12 ou 13, **caractérisé en ce que** l'appareil de commande (12) est fonctionnellement intégré dans un appareil de commande de boîte de vitesses de la machine de travail.
